# EUROPÄISCHE PATENTSCHRIFT

(11) **EP 1 409 855 B1**
(45) Veröffentlichungstag und Bekanntmachung des Hinweises auf die Patenterteilung: **18.01.2006**
(21) Anmeldenummer: 01989440.1
(22) Anmeldetag: 07.11.2001
(51) Int. Cl.: F01N 3/22, F01N 3/32, F01N 11/00

(54) **BRENNKRAFTMASCHINE MIT SEKUNDÄRLUFTAUFLADUNG UND VERFAHREN ZUR REGELUNG DES SEKUNDÄRLUFTLADERS**
INTERNAL COMBUSTION ENGINE COMPRISING A SECONDARY AIR CHARGE AND A METHOD FOR CONTROLLING THE SECONDARY AIR-CHARGE ASSEMBLY
MOTEUR A COMBUSTION INTERNE A COMPRESSION D'AIR SECONDAIRE ET PROCEDE DE REGLAGE DU COMPRESSEUR D'AIR SECONDAIRE

(30) Priorität: 22.12.2000 DE 10064481
(43) Veröffentlichungstag der Anmeldung: 21.04.2004
(73) Patentinhaber: Mann + Hummel GmbH, 71638 Ludwigsburg (DE)
(72) Erfinder: HUMMEL, Karl, Ernst, 74321 Bietigheim-Bissingen (DE)
(74) Vertreter: Voth, Gerhard
(86) Internationale Anmeldenummer: PCT/EP2001/012848
(87) Internationale Veröffentlichungsnummer: WO 2002/052130

(56) Entgegenhaltungen:
- EP-A- 0 659 986
- EP-B- 0 800 618
- WO-A-97/38212
- DE-A- 4 120 891
- PATENT ABSTRACTS OF JAPAN vol. 010, no. 270 (M-517), 13. September 1986 (1986-09-13) & JP 61 093242 A (MAZDA MOTOR CORP;OTHERS: 01), 12. Mai 1986 (1986-05-12)

## Beschreibung

### Stand der Technik

Die Erfindung betrifft eine Brennkraftmaschine mit einem Sekundärluftlader, der durch einen Sensor überwacht wird, nach der Gattung des Patentanspruches 1. Außerdem betrifft die Erfindung ein Verfahren zur Messung des Betriebszustandes nach der Gattung des Patentanspruches 6.

Vorrichtungen der eingangs genannten Art sind bekannt, z. B. aus der WO 97 / 38 212. Gemäß Figur 8 dieses Dokumentes wird ein Sekundärlufteinblassystem für eine Brennkraftmaschine vorgestellt, welches aus einer Turbineneinheit 114 und einem Verdichter 113 besteht. Die Turbine wird über eine Umgehungsleitung angetrieben, die parallel zur Drosselklappe 115 im Ansaugtrakt angeordnet ist. In der Umgehungsleitung zur Turbine ist weiterhin zumindest ein Drosselorgan 120 angeordnet. Die gleichzeitige Einstellung von Ansaugluftstrom und Sekundärluftstrom erfolgt durch das Zusammenspiel von Drosselklappe 115 und Drosselorgan 120. Dabei läßt sich einerseits die Leistung der Turbine 114 und somit auch die von dem Verdichter 113 geförderte Sekundärluft und andererseits der geförderte Ansaugluftstrom als Addition der Luftströme durch das Drosselorgan 120 und die Drosselklappe 115 einstellen. Anstelle der geregelten Turbine kann selbstverständlich auch ein anderer Antrieb für den Verdichter vorgesehen werden, zum Beispiel ein Elektromotor.

Zur optimalen Einstellung der beiden Luftströme müssen die komplexen Vorgänge der Brennkraftmaschine bekannt sein. Hieraus kann der aktuelle Luftbedarf im Ansaugtrakt der Brennkraftmaschine bzw. in der Abgasanlage ermittelt werden. Der Luftbedarf der Brennkraftmaschine ist z. B. vom Lastzustand, aber auch von der gewünschten Betriebsart, z. B. der Verbrennung des Kraftstoffes unter Sauerstoffüberschuß oder- mangel abhängig. In die Abgasanlage wird Sekundärluft z. B. in der Kaltstartphase des Motors eingeleitet. Diese soll unvollständig verbrannte Abgasbestandteile oxidieren und durch diese exotherme Reaktion zusätzlich den nachgeschalteten Katalysator in der Abgasanlage aufheizen. Dadurch wird während der Kaltstartphase zum einen der Schadstoffausstoß verringert, zum andern wird die Kaltstartphase verkürzt, da der Katalysator durch die Aufheizung früher zur Wirkung kommt.

Bei der Einleitung der Sekundärluft muß ein bestimmtes Luftverhältnis eingestellt werden, damit die Emissionsreduzierung funktioniert. Bei zuviel Sekundärluft wird das Abgas zu stark abgekühlt, ohne das weitere Abgasbestandteile oxidiert werden. Bei zuwenig Sekundärluft ist nicht ausreichend Sauerstoff zur Oxidation der Abgasbestandteile vorhanden.

Daher ist die Überwachung der durch den Sekundärluftlader geförderten Luftmenge notwendig. Gemäß der EP 800 618 B1 ist ein Verfahren offenbart, nach dem die durch die Sekundärluftpumpe geförderte Luftmenge durch einen Luftmassensensor ermittelt wird, wobei der ermittelte Wert zur Steuerung der Sekundärluftpumpe herangezogen wird. Die Verwendung von Luftmassensensoren hat jedoch bedeutende Nachteile. Zum einen sind diese Messgeräte recht teuer, wodurch die Wirtschaftlichkeit der vorgeschlagenen Lösung leidet. Zum anderen besteht eine große Verschmutzungsempfindlichkeit, wodurch die ermittelten Luftmassenwerte verfälscht werden können. Dies wirkt sich direkt auf das gewünschte, zu erreichende Abgasergebnis der Brennkraftmaschine aus.

Aufgabe der Erfindung ist es daher, eine Überwachungseinrichtung bzw. ein Verfahren zu deren Betrieb zu schaffen, welche für eine in einer Brennkraftmaschine eingebauten Sekundärluftlader geeignet ist, wirtschaftlich in der Herstellung ist und zuverlässig im Betrieb ist. Diese Aufgabe wird durch die Merkmale der Patentansprüche 1 bzw. 2 sowie der Patentansprüche 6 bis 8 gelöst.

### Vorteile der Erfindung

Die erfindungsgemäße Brennkraftmaschine ist in bekannter Weise mit einem Sekundärluftlader ausgestattet. Dieser fördert die Sekundärluft direkt in die Abgasanlage, wodurch die bereits beschriebenen Vorteile für den Betrieb des ebenfalls in der Abgasanlage vorgesehenen Katalysators erreicht werden. Weiterhin ist ein Sensor vorgesehen, der ein Messsignal erzeugt, welches geeignet ist, die Fördermenge an Sekundärluft zu bestimmen.

Die Erfindung ist dadurch gekennzeichnet, dass dieser Sensor aus einem Temperatursensor besteht. Dieser ist derart angeordnet, dass er mit der Luft hinter dem Verdichter kommuniziert, dass heißt die Temperatur dieser Luft messen kann. Dabei ist es vorteilhaft, den Temperatursensor möglichst dicht hinter den Verdichterausgang zu plazieren. Er kann zum Beispiel innerhalb der Verbindungsleitung angebracht werden, welche sich zwischen dem Sekundärtuftlader und der Abgasanlage befindet, um die Sekundärluft vor dem Katalysator zuzuführen.

Für einen besonders ausgestalteten Sekundärluftlader, der seinerseits von einer Turbine angetrieben wird, welche den Druckabfall über einer im Ansaugsystem vorhandenen Drosselklappe nutzt, kann der Temperatursensor auch zum Beispiel am Turbinenausgang angebracht sein. Dabei erfasst der Sensor die Temperatur, welche die durch die Turbine entspannte Ansaugluft aufweist.

Das erfindungsgemäße Messprinzip macht sich den Umstand zu nutze, dass bei der durch den Sekundärluftlader verdichteten Luft ein Temperaturanstieg zu verzeichnen ist. Dementsprechend sinkt andererseits die Temperatur der durch die Turbine entspannten Ansaugluft. Damit lässt sich zwischen dem Temperaturanstieg bzw. -abfall und der durch den Sekundärluftlader geförderten Luftmenge ein direkter Zusammenhang herstellen. Die gemessenen Temperaturwerte lassen sich also hinsichtlich der Förderleistung des Sekundärluftladers auswerten und ermöglichen auf diese Weise dessen Steuerung bzw. Regelung.

Eine vorteilhafte Ausführung der Erfindung ergibt sich, wenn gleichzeitig die Temperaturabsenkung an der Turbine und die Temperaturerhöhung am Verdichter gemessen wird. Hierbei ergibt sich eine Temperaturdifferenz, die betragsmäßig höher liegt als bei der Messung lediglich eines dieser beiden Werte. Dadurch sind genauere Aussagen über die Förderleistung des Sekundärluftladers möglich.

Weiterhin kann vorteilhaft ein Temperatursensor vor der Turbine bzw. dem Verdichter vorgesehen werden. Auf diese Weise lässt sich die aktuelle Temperaturdifferenz am Verdichter bzw. an der Turbine jederzeit bestimmen. Auch hierdurch lässt sich die Genauigkeit des aktuellen Messergebnisses verbessern. Wie jedoch im Zusammenhang mit den Verfahren zum Betrieb des Sekundärluftladers noch genauer ausgeführt, ist ein solcher zusätzlicher Temperatursensor nicht unbedingt notwendig.

Weiterhin wird ein Verfahren zur Überwachung der Sekundärlufteinblasung in die Abgasanlage einer Brennkraftmaschine beansprucht. Dieses ist insbesondere dazu geeignet, bei der bereits beschriebenen Vonichtung zur Sekundärlufteinleitung zur Anwendung zu kommen. Das Verfahren besitzt drei unterschiedliche Ausgestaltungen.

Nach einer ersten Ausgestaltung des Verfahrens wird die Erwärmung der Sekundärluft, die durch die Verdichtung der Sekundärluft erfolgt, gemessen, wobei hierzu zumindest ein Temperaturfühler auf der Seite des Verdichterausganges notwendig ist. Bei der alternativen Ausgestaltung ist der Temperaturfühler an der Ausgangsseite der Turbine des Sekundärluftladers angebracht, wodurch eine Temperaturverringerung der expandierten Luft zu messen ist.

Der Vorgang der Sekundärlufteinblasung findet jeweils nach dem Kaltstart des Motors innerhalb der ersten hundert Betriebssekunden statt. Daher ist es möglich, die jeweils verwendeten Temperatursensoren auf den Ausgangsseiten von Turbine oder Verdichter auch zur Messung des Vergleichssignals zu nutzen, welches die Temperaturerhöhung oder -verringerung ergibt. Während dieser kurzen Betriebsdauer des Sekundärluftladers kann davon ausgegangen werden, dass sich die Temperatur der Umgebungsluft, also der angesaugten Sekundärluft bzw. Ansaugluft für den Motor nicht wesentlich ändert. Daher kann auf den zweiten Sensor zur Ermittlung eines Vergleichssignals verzichtet werden. Allerdings kann ein solcher zweiter Sensor vorgesehen werden, wodurch sich eine höhere Genauigkeit der Messwerte erzielen läßt. Im Übrigen kann das Verfahren zur Überwachung der Sekundärlufteinblasung auch genutzt werden, um weitere Aussagen hinsichtlich der Funktion des Sekundärluftladers zu machen. In diesem Fall kann der zweite Temperatursensor sinnvoll sein.

Eine denkbare Aussage über die Funktion des Sekundärluftladers ist zum Beispiel die Sensierung von Fehlfunktionen. Bei einem Lagerschaden im Sekundärluftlader würde zum Beispiel die erreichbare Drehzahl abfallen, wodurch die geforderte Förderleistung nicht mehr erreicht werden könnte. Dies würde zum Beispiel durch das nicht Erreichen des zu erwartenden Temperaturunterschiedes am Sekundärluftlader auffallen und könnte als Fehlersignal an die Motorsteuerung weitergegeben werden.

Ein alternatives Verfahren unter Verwendung von zwei Temperatursensoren sieht vor, dass je ein Temperatursensor für die expandierte Ansaugluft hinter der Turbine und für die komprimierte Sekundärluft hinter dem Verdichter vorgesehen ist. Beim Betrieb des Sekundärluftladers wird dabei die Temperatur hinter der Turbine fallen und die Temperatur hinter dem Verdichter steigen. Auf diese Weise lässt sich die erreichte Temperatur differenz auswerten. Diese liegt betragsmäßig über den einzelnen gemessenen Werten der beiden Sensoren, wodurch sich das Messergebnis besser auflösen lässt. Außerdem ist die so gemessene Temperaturdifferenz im wesentlichen unabhängig von der ursprünglichen Temperatur der angesaugten Umgebungsluft, da bei einer Verschiebung der Temperatur der Umgebungsluft lediglich eine Parallelverschiebung der beiden gemessenen Werte auf der Temperaturachse stattfindet.

Eine weitere Ausgestaltung des Messverfahrens beinhaltet die Auswertung der zeitlichen Veränderung der Messergebnisse. Hierbei lässt sich der Temperaturgradient über der Zeit δT/δt ermitteln. Der Vorteil einer derartigen Auswertung der Messergebnisse liegt während des Hochlaufens des Sekundärluftladers darin, dass dieser Wert zu einem früheren Zeitpunkt der Messung auswertbare Ergebnisse liefert, als die Messung des endgültig erreichten Temperatumiveaus.

Weiterhin ist es von großem Vorteil, die Messergebnisse für weitere Aussagen hinsichtlich der Funktion des Sekundärlüftladers zu nutzen. Hierbei können sowohl die endgültig erreichten Temperaturniveaus zu Rate gezogen werden, wie auch eventuell ein ermittelter Temperaturgradient. Auf diese Weise können zum Beispiel Fehlfunktionen des Sekundärluftladers ermittelt werden. Beispielsweise könnte ein Lagerverschleiß dazu führen, das der Sekundärluftlader die Nenndrehzahl nicht mehr erreicht. In einem solchen Falle würde das Temperatumiveau des Nennbetriebszustandes nicht mehr erreicht werden, was durch eine entsprechende Auswertungslogik angezeigt werden könnte.

Weitere Aussagen hinsichtlich der Funktion des Sekundärluftladers können zum Beispiel nötig werden, wenn diese weitere Aufgaben neben der Sekundärlufteinblasung in der Kaltstartphase des Motors übernimmt. Zum Beispiel kann der Sekundärluftlader eingesetzt werden, um Frischluft für eine Desulfatisierung des Abgaskatalysators in die Abgasleitung einzuspeisen. Hierbei können andere geforderte Luftmengen über die Steuerung eingestellt werden.

Diese und weitere Merkmale von bevorzugten Weiterbildungen der Erfindung gehen au-βer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: eine Brennkraftmaschine mit einem Sekundärluftlader, der durch eine parallel zur Drosselklappe geschaltete Turbine angetrieben wird, als Blockschaltbild,
- Figur 2: eine Brennkraftmaschine mit konventioneller Sekundärlufteinblasung, bei der der Verdichter durch einen Elektromotor angetrieben wird als Blockschaltbild,
- Figur 3: den Temperaturverlauf über der Zeit eines Sekundärluftladers mit Verdichter und Turbine.

### Beschreibung der Ausführungsbeispiele

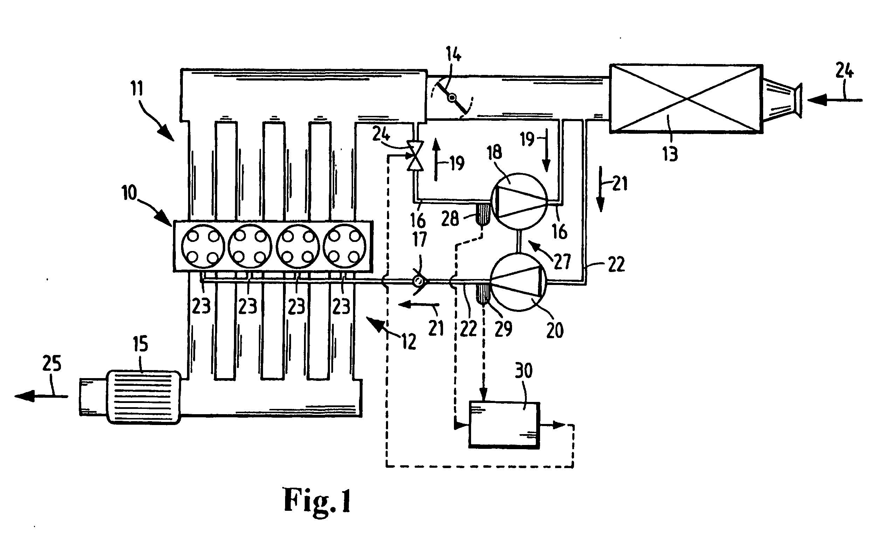

In Figur 1 ist eine Ausführungsform dargestellt, welche mit einem minimalen Aufwand an Komponenten auskommen soll. Es ist eine Brennkraftmaschine 10 vorgesehen, welche mit einem Ansaugtrakt 11 und einer Abgasanlage 12 ausgestattet ist. Im Ansaugtrakt befindet sich zumindest ein Luftfilter 13 und eine Drosselklappe 14. Die Abgasanlage ist mit einem Katalysator 15 ausgestattet. Hinter dem Luftfilter 13 und vor der Drosselklappe 14 zweigt eine Umgehungsleitung 16 ab, die dem Ansaugtrakt 11 hinter der Drosselklappe wieder zugeführt wird. In der Umgehungsleitung 16 ist ein Drosselorgan 24 vorgesehen. Weiterhin ist eine Turbine 18 in der Umgehungsleitung 16 angeordnet, die durch einen Umgehungsluftstrom 19 angetrieben wird. Die Turbine ist mechanisch mit einem Verdichter 20 gekoppelt, der einen Sekundärluftstrom 21 in einer Sekundärluftleitung 22 fördert, und bildet so einen Sekundärluftlader 27. Die Sekundärluftleitung mündet in Zuführungen 23 der Abgasanlage 12 vor dem Katalysator 15. In der Sekundärluftleitung ist ein Rückschlagventil 17, welches einen Rückfluß an heißem Abgas durch diese Leitung vermeidet, vorgesehen. Die Flußrichtungen eines Ansaugluftstromes 24 des Umgehungsluftstromes 19 und des Sekundärluftstromes 21 sowie des Abgases 25 sind durch Pfeile entlang der Leitungen angedeutet.

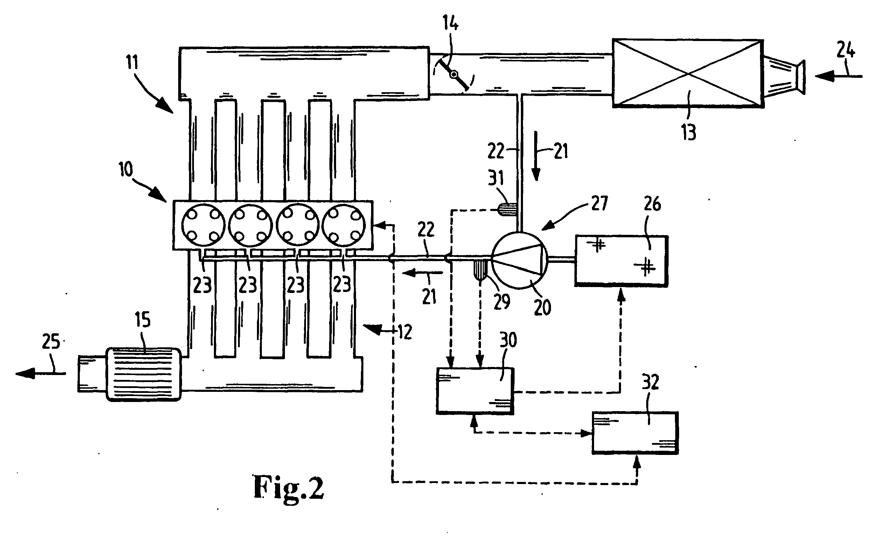

Die bisher beschriebenen Elemente finden sich bis auf den Antrieb durch die Turbine in den Ausführungsform gemäß Figur 2 wieder und werden an dieser Stelle nicht nochmals erläutert. Anstelle der Turbine ist jedoch ein konventioneller Elektromotor 26 zum Antrieb des Verdichters 20 vorgesehen.

Weiterhin sind in Figur 1 und 2 unterschiedliche Messanordnungen für die Temperatur vor bzw. hinter der Turbine und dem Verdichter angeordnet, welche im folgenden näher erläutert werden sollen. Sofern sich diese Messanordnungen nicht auf die Turbine gemäß Figur 1 beziehen, sind diese Messanordnungen ebenfalls bei beiden dargestellten Systeme gemäß Figur 1 und 2 anwendbar, auch wenn sie nur im Rahmen der jeweils einen Figur beschrieben werden.

Gemäß Figur 1 ist jeweils ein Temperatursensor 28 am Ausgang der Turbine 18 und ein Temperatursensor 29 am Ausgang des Verdichters 20 angeordnet. Diese korrespondieren mit einer Steuerung 30, die die Messsignale auswertet. In diesem Ausführungsbeispiel wird eine Differenz zwischen den beiden gemessenen Temperaturen gebildet, so dass die Ausgangstemperatur, die sowohl am Verdichtereingang als auch am Turbineneingang vorliegt, außer acht gelassen werden kann. Die Steuerung 30 nimmt auf das Drosselorgan 24 Einfluss, um im Abhängigkeit des Messergebnisses der Temperatursensoren 28, 29 einen entsprechenden Sekundärluftstrom einstellen zu können. Hierbei wird der Umstand genutzt, dass die Förderleistung des Verdichters 20 von dem Luftdurchgang durch die Turbine 18 abhängt.

Bei der Messanordnung gemäß Figur 2 wird ebenfalls am Ausgang des Verdichters 20 der Temperatursensor 29 vorgesehen. Zusätzlich wird ein weiterer Temperatursensor 31 am Eingang des Verdichters 20 vorgesehen. Diese Temperatursensoren korrespondieren wie beschrieben mit der Steuerung 30. Hierdurch ist ein direkter Vergleich von Eingangstemperatur und Ausgangstemperatur des Sekundärluftstroms 21 möglich. Dieser wird durch die Steuerung 30 ausgewertet und die Drehzahl des Elektromotors 26 der geforderten Sekundärluftmenge angepasst. Weiterhin kommuniziert die Steuerung 30 mit einer Motorsteuerung 32, wobei auf diese Weise zusätzliche Daten über den Betriebszustand der Brennkraftmaschine ausgewertet werden können. Außerdem lassen sich die ermittelten Daten über den Sekundärluftstrom durch die Motorsteuerung auswerten. Die Motorsteuerung kommuniziert in der angedeuteten Weise mit der Brennkraftmaschine. Selbstverständlich können die Steuerung 30 und die Motorsteuerung 32 auch in einer Einheit zusammengefaßt werden.

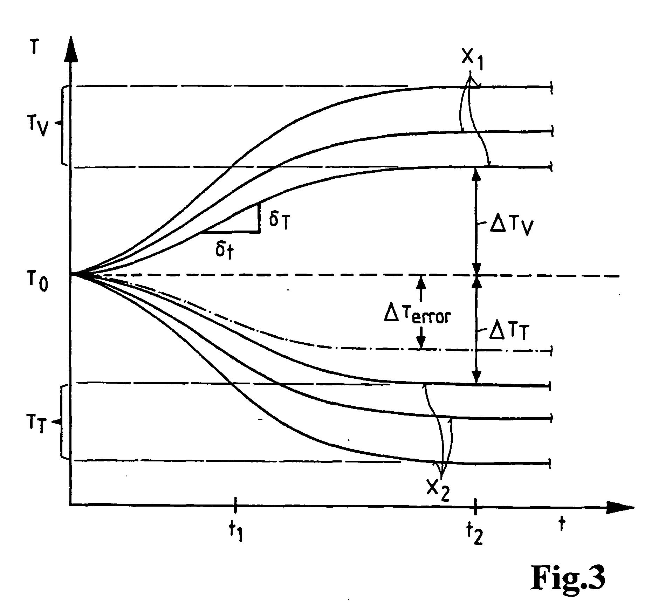

In Figur 3 ist der Temperaturverlauf der geförderten Luft eines Sekundärluftladers zu erkennen, der durch eine Turbine angetrieben wird. Der Temperaturverlauf eines Sekundärluftladers mit konventionellem Antrieb entspricht der obersten Kurvenschar X₁, so dass dieses Diagramm auch für diesen Fall anwendbar ist. Ausgehend von der Umgebungstemperatur T₀ folgt im Verdichter durch die Förderung der Sekundärluft eine Erwärmung. Je mehr Luft durch den Verdichter gefördert wird, desto stärker ist die Erwärmung. Dies ist durch die Kurvenschar X₁ angedeutet. Dadurch ist durch die verschiedenen definierten Betriebszustände des Verdichters ein Temperaturbereich T_{V} angegeben, in der dieser betrieben wird.

Ein vergleichbarer Temperaturverlauf ergibt sich für die Turbine, nur dass durch die Entspannung der Ansaugluft in der Turbine eine Verringerung der Temperatur T₀ erfolgt. Dabei ergibt sich die Kurvenschar X₂ und ein Temperaturbereich T_{T} in welchem die Turbine betrieben werden kann.

Da der Sekundärluftlader bei verschiedenen Temperaturen betrieben werden kann, muss die Veränderung der Temperatur im Verhältnis zu T₀ bestimmt werden. Diese Temperatur ist durch eine gestrichelte Gerade angedeutet, die im Normalfall parallel zur Zeitachse verläuft. Eine erste Möglichkeit der Messung ist zum Zeitpunkt t₂ angegeben. Zu diesem Zeitpunkt sind Turbine und Verdichter hochgelaufen, so dass ΔT_{V} als Temperatumiveau am Verdichter gemessen werden kann. auf die gleiche Weise kann ΔT_{T} bezüglich der Turbine gemessen werden. Alternativ kann auch der Temperaturgradient δT/δt zum Zeitpunkt t₁ gemessen werden. Dies ist im Diagramm nur für den Verdichter angedeutet. Es zeigt sich, dass der Gradient umso steiler wird, je höher das endgültig erreichte Temperaturniveau ist. Daher kann zu einem früheren Zeitpunkt als t₂ schon eine Aussage über das einmal erreichte Temperatumiveau gemacht werden. Die Ermittlung des Temperaturgradienten hat dabei den Vorteil, dass zu einem früheren Zeitpunkt nach Start des Sekundärluftladers ein auswertbares Ergebnis vorliegt.

Zuletzt ist in dem Diagramm schematisch eine Temperatur strichpunktiert eingezeichnet, die zu einem Fehlbetrieb des Sekundärluftladers führt. Diese kann zum Beispiel bei einem Lagerschaden am Sekundärluftlader auftreten. Durch den Temperatursensor wird ein Temperaturwert ΔTₑᵣᵣₒᵣ ermittelt, der in der Steuerung zu einer Ausgabe eines Fehlersignals führt.

## Patentansprüche

1. Brennkraftmaschine (10) mit einem Ansaugtrakt (11) für die Ansaugluft und einer Abgasanlage (12) für die Verbrennungsprodukte der Brennkraftmaschine, wobei
- ein Sekundärluftlader (16, 26) vorgesehen ist, der einen durch einen Antrieb (16, 26) betriebenen hydrodynamischen Verdichter (20) aufweist,
- ein Sensor zur Erzeugung eines zur Ermittlung der Fördermenge an Sekundärluft geeigneten Messsignals vorhanden ist,
**dadurch gekennzeichnet, dass** der Sensor ein Temperatursensor (29) ist, der mit der verdichteten Luft hinter dem Verdichter kommuniziert, um deren Temperatur zu messen, derart, dass im Betrieb mittels des Temperatursensors (29) erst die Umgebungstemperatur gemessen wird und im folgenden die steigende Temperatur der verdichteten Luft gemessen wird und über die Änderung der Temperatur im Verhältnis zur Umgebungstemperatur ein Rückschluss auf die Sekundärluftfördermenge getroffen wird.

2. Brennkraftmaschine (10) nach Anspruch 1
**dadurch gekennzeichnet, dass**
- der Antrieb durch eine Turbine (18) gebildet ist, welche parallel zu einer Drosselklappe (14) im Ansaugtrakt angeordnet ist und
- der Sensor ein Temperatursensor (28) ist, der alternativ zur Anordnung des Temperatursensors (29) mit der entspannten Ansaugluft hinter der Turbine (18) kommuniziert, um deren Temperatur zu messen, derart, dass im Betrieb mittels des Temperatursensors (28) erst die Umgebungstemperatur gemessen wird und im folgenden die fallende Temperatur der entspannten Luft gemessen wird und über die Änderung der Temperatur im Verhältnis zur Umgebungstemperatur ein Rückschluss auf die Sekundärluftfördermenge getroffen wird.

3. Brennkraftmaschine nach Anspruch 2, **dadurch gekennzeichnet, dass** ein zweiter Temperatursensor (29) vorgesehen ist, der mit der verdichteten Luft hinter dem Verdichter kommuniziert, um deren Temperatur zu messen.

4. Brennkraftmaschine nach einem der vorherigen Ansprüche, **dadurch gekennzeichnet, dass** ein weiterer Temperatursensor (31) vorgesehen ist, der mit der Luft vor dem Verdichter kommuniziert, um deren Temperatur zu messen.

5. Brennkraftmaschine nach einem der Ansprüche 2 bis 4, **dadurch gekennzeichnet, dass** ein weiterer Temperatursensor (31) vorgesehen ist, der mit der Luft vor der Turbine kommuniziert, um deren Temperatur zu messen.

6. Verfahren zur Überwachung der Sekundärlufteinblasung in die Abgasanlage einer Brennkraftmaschine, bei dem die Fördermenge an Sekundärluft, die durch einen hierfür vorgesehenen Sekundärluftlader gefördert wird, überwacht wird, **dadurch gekennzeichnet, dass** die Erwärmung der Sekundärluft gegenüber der Umgebungstemperatur, die durch deren Verdichtung erfolgt, gemessen wird und das Messergebnis als Maß für die Förderleistung des Sekundärluftladers herangezogen wird.

7. Verfahren nach Anspruch 6, wobei der Antrieb des Sekundärluftladers durch eine Turbine (18) gebildet ist, welche parallel zu einer Drosselklappe (14) in einem Ansaugtrakt der Brennkraftmaschine angeordnet ist, **dadurch gekennzeichnet, dass** ,alternativ zur Messung der Erwärmung der Sekundärluft, die Abkühlung der Ansaugluft gegenüber der Umgebungstemperatur, die durch deren Expansion in der Turbine (18) erfolgt, gemessen wird und das Messergebnis als Maß für die Förderleistung des Sekundärluftladers herangezogen wird.

8. Verfahren nach Anspruch 7, **dadurch gekennzeichnet, dass**
- die Temperatur der Ansaugluft hinter der Turbine (18) gemessen wird,
- die Temperatur der Sekundärluft hinter dem Verdichter gemessen wird und
- die diese beiden Messergebnisse als Maß für die Förderleistung des Sekundärluftladers herangezogen werden.

9. Verfahren nach einem der Ansprüche 6 bis 8, **dadurch gekennzeichnet, dass** die zeitliche Veränderung der Messergebnisse ermittelt und als Maß für die Förderleistung des Sekundärluftladers herangezogen wird.

10. Verfahren nach einem der Ansprüche 6 bis 9, **dadurch gekennzeichnet, dass** die Messergebnisse für weitere Aussagen hinsichtlich der Funktion des Sekundärluftladers genutzt werden.

## Claims

1. Internal combustion engine (10) having an intake tract (11) for the intake air and an exhaust gas system (12) for the combustion products of the internal combustion engine, wherein
- there is provided a secondary air charging means (16, 26), which includes a hydrodynamic compressor driven by a driving means (16, 26) and
- there is provided a sensor for generating a measuring signal
suitable for determining the delivery rate of secondary air, **characterised in that** the sensor is a temperature sensor (29) which communicates with the compressed air downstream of the compressor in order to measure the temperature of same in such a manner that during operation, by means of the temperature sensor (29), firstly the ambient temperature is measured, followed by the measuring of the rising temperature of the compressed air and a conclusion as to the secondary air delivery rate is reached by way of the change in the temperature in relation to the ambient temperature.

2. Internal combustion engine (10) according to claim 1, **characterised in that**
- the driving means is formed by a turbine (18), which is disposed parallel to a throttle valve (14) in the intake tract, and
- the sensor is a temperature sensor (28), which, alternatively to the disposition of the temperature sensor (29), communicates with the depressurised intake air downstream of the turbine (18) in order to measure the temperature of same, in such a manner that during operation, by means of the temperature sensor (28), firstly the ambient temperature is measured, followed by the measuring of the falling temperature of the depressurised air and a conclusion as to the secondary air delivery rate is reached by way of the change in the temperature in relation to the ambient temperature.

3. Internal combustion engine according to claim 2, **characterised in that** there is provided a second temperature sensor (29), which communicates with the compressed air downstream of the compressor in order to measure the temperature of same.

4. Internal combustion engine according to one of the preceding claims, **characterised in that** there is provided an additional temperature sensor (31), which communicates with the air upstream of the compressor in order to measure the temperature of same.

5. Internal combustion engine according to one of claims 2 to 4, **characterised in that** there is provided an additional temperature sensor (31), which communicates with the air upstream of the turbine in order to measure the temperature of same.

6. Method for monitoring the secondary air injection into the exhaust gas system of an internal combustion engine, where the delivery rate of secondary air, which is conveyed by a secondary air charging means provided for this purpose, is monitored, **characterised in that** the heating-up of the secondary air compared to the ambient temperature, which is effected by means of the compression of the same, is measured and the measuring result is used as measurement for the delivery rate of the secondary air charging means.

7. Method according to claim 6, wherein the driving means of the secondary air charging means is formed by a turbine (15), which is disposed parallel to a throttle valve (14) in an intake tract of the internal combustion engine, **characterised in that**, alternatively to the measuring of the heating-up of the secondary air, the cooling-down of the intake air compared to the ambient temperature, which is effected through the expansion of the same in the turbine, is measured and the measuring result is used as measurement for the delivery rate of the secondary air charging means.

8. Method according to claim 7, **characterised in that**
- the temperature of the intake air downstream of the turbine (18) is measured
- the temperature of the secondary air downstream of the compressor is measured and
- these two measuring results are used as measurement for the delivery rate of the secondary air charging means.

9. Method according to one of claims 6 to 8, **characterised in that** the change in the measuring results over time is determined and used as measurement for the delivery rate of the secondary air charging means.

10. Method according to one of claims 6 to 9, **characterised in that** the measuring results are used for additional information with regard to the operation of the secondary air charging means.

## Revendications

1. Moteur à combustion interne (10) comprenant :
- un système d'aspiration (11) pour l'air d'aspiration et un système de gaz d'échappement (12) pour les produits de combustion du moteur à combustion interne,
- un compresseur d'air secondaire (16, 26) qui présente un compresseur (20) hydrodynamique fonctionnant à l'aide d'un entraînement (16, 26),
- un capteur pour générer un signal de mesure approprié pour déterminer le débit d'air secondaire,
**caractérisé en ce que**
le capteur est un capteur de température (29) qui communique avec l'air comprimé en aval du compresseur pour mesurer la température de cet air, de telle sorte qu'en fonctionnement on mesure d'abord la température ambiante au moyen du capteur de température (29), puis la température montante de l'air comprimé, et des conclusions concernant le débit d'air secondaire sont tirées à partir de la variation de la température par rapport à la température ambiante.

2. Moteur à combustion interne (10) selon la revendication 1,
**caractérisé en ce que**
- l'entraînement est formé par une turbine (18) disposée parallèlement à un clapet d'étranglement (14) dans le système d'aspiratian, et
- le capteur est un capteur de température (28) qui en variante à la disposition du capteur de température (29) communique avec l'air d'aspiration détendu en aval de la turbine (18) pour mesurer la température de cet air, de telle sorte qu'en fonctionnement on mesure d'abord la température ambiante au moyen du capteur de température (28), puis la température descendante de l'air détendu, et des conclusions concernant le débit d'air secondaire sont tirées à partir de la variation de la température par rapport à la température ambiante.

3. Moteur à combustion interne selon la revendication 2,
**caractérisé en ce qu'**
un deuxième capteur de température (29) communiquant avec l'air comprimé en aval du compresseur est prévu pour mesurer la température de cet air.

4. Moteur à combustion interne selon l'une quelconque des revendications précédentes,
**caractérisé en ce qu'**
un autre capteur de température (31) communiquant avec l'air en amont du compresseur est prévu pour mesurer la température de cet air.

5. Moteur à combustion interne selon l'une quelconque des revendications 2 à 4,
**caractérisé en ce qu'**
un autre capteur de température (31) communiquant avec l'air en amont de la turbine est prévu pour mesurer la température de cet air.

6. Procédé de surveillance du soufflage d'air secondaire dans le système de gaz d'échappement d'un moteur à combustion interne, en surveillant le débit d'air secondaire refoulé par un compresseur d'air secondaire prévu à cet effet,
**caractérisé en ce que**
l'échauffement de l'air secondaire par rapport à la température ambiante provoqué par la compression de celui-ci est mesuré et le résultat de mesure est utilisé comme valeur pour le débit du compresseur d'air secondaire.

7. Procédé selon la revendication 6, dans lequel l'entraînement du compresseur d'air secondaire est formé par une turbine (18) disposée parallèlement à un clapet d'étranglement (14) dans un système d'aspiration du moteur à combustion interne,
**caractérisé en ce qu'**
en variante à la mesure de réchauffement de l'air secondaire on mesure le refroidissement de l'air d'aspiration par rapport à la température ambiante provoqué par l'expansion de celui-ci dans la turbine (18) et on utilise le résultat de mesure comme valeur pour le débit du compresseur d'air secondaire.

8. Procédé selon la revendication 7,
**caractérisé en ce que**
- la température de l'air d'aspiration est mesurée en aval de la turbine (18),
- la température de l'air secondaire est mesurée en aval du compresseur, et
- ces deux résultats de mesure sont utilisés comme valeur pour le débit du compresseur d'air secondaire.

9. Procédé selon l'une quelconque des revendications 6 à 8,
**caractérisé en ce que**
la variation dans le temps des résultats de mesure est déterminée et utilisée comme valeur pour le débit du compresseur secondaire.

10. Procédé selon l'une quelconque des revendications 6 à 9,
**caractérisé en ce que**
les résultats de mesure sont utilisés pour obtenir d'autres informations concernant le fonctionnement du compresseur d'air secondaire.
